# EUROPÄISCHE PATENTSCHRIFT

(11) **EP 2 475 976 B1**
(45) Veröffentlichungstag und Bekanntmachung des Hinweises auf die Patenterteilung: **17.05.2017**
(21) Anmeldenummer: 10745232.8
(22) Anmeldetag: 19.08.2010
(51) Int. Cl.: G01N 21/64, G01N 21/65

(54) **VERWENDUNG VON LASER-OPTISCHEN VORRICHTUNGEN**
USE OF A LASER-OPTICAL DEVICE
UTILISATION DE DISPOSITIFS OPTIQUES AU LASER

(30) Priorität: 10.09.2009 CH 14062009
(43) Veröffentlichungstag der Anmeldung: 18.07.2012
(73) Patentinhaber: General Electric Technology GmbH, 5400 Baden (CH)
(72) Erfinder: WITZ, Gregoire, 5413 Birmenstorf (CH); BOSSMANN, Hans-Peter, 79787 Lauchringen (DE)
(74) Vertreter: Bernotti, Andrea
(86) Internationale Anmeldenummer: PCT/EP2010/062119
(87) Internationale Veröffentlichungsnummer: WO 2011/029708

(56) Entgegenhaltungen:
- EP-A2- 0 552 821
- GB-A- 2 330 653
- US-A- 4 030 827
- US-A1- 2003 115 941
- US-A1- 2007 134 518

## Beschreibung

### TECHNISCHES GEBIET

Die vorliegende Erfindung betrifft die Verwendung einer Laser-optischen Vorrichtung zur optischen Überprüfung der Qualität einer Oberfläche vor deren Beschichtung mit einer Schicht, bevorzugt einer metallischen, keramischen oder organischen Schicht.

### STAND DER TECHNIK

Ungenügende Qualitäten von metallischen oder keramischen Beschichtungen auf der Oberfläche von Gasturbinenbauteilen, beispielsweise von metallischen Verbindungsschichten von thermischen Barriereschichten, gehen häufig auf Oberflächenverschmutzungen zurück, die herstellungsbedingt sind oder durch der Auftragung der metallischen Schicht vorgeschaltete Bearbeitungsschritte zustande kommen. So können solche oberflächlichen Verschmutzungen beispielsweise Resultate des Gussverfahrens oder Schmiedeverfahrens sein, Resultate der Oberflächenbehandlung des Rohlings (beispielsweise vom Sandstrahlen oder von der Reinigung mit organischen Lösungsmitteln) oder ungewünschte Verschmutzungen einer vorgängigen Beschichtungsstufe. Es kann sich aber auch einfach um Schmutz oder auch um Oxidationsprodukte handeln. Solche Verschmutzungen werden nach dem Stand der Technik typischerweise durch metallographische Querschnitte, Pull-off Adhäsionstests, oder durch Kratztests der beschichteten Teile überprüft. Alle diese Verfahren sind zerstörende Verfahren, und mit den entsprechenden bekannten Nachteilen behaftet.

Aus der GB-A-2330653 ist aus dem Gebiet der Reinigung von Automobilbauteilen oder Flugzeugbauteilen ein Laser-Reinigungsverfahren bekannt. Das Dokument schlägt vor, ein solches Verfahren zu überwachen, indem ultraviolette Strahlung auf das zu reinigende Bauteil gerichtet wird und damit fluoreszierende Verunreinigungen, namentlich Lösungsmittel oder Epoxypartikel, zur Fluoreszenz angeregt werden. Anschließend wird mit einem Detektor die Intensität oder das Abklingverhalten der Fluoreszenz gemessen, um die Dicke der Verunreinigung zu bestimmen.

Aus einem völlig anderen Gebiet, namentlich aus dem Gebiet der Sortierung von Edelsteinen, ist es aus der EP-A-0552821 bekannt, dass Raman-Streuung dazu eingesetzt werden kann, um unterschiedliche Gesteinssorten von den gewünschten Edelsteinen zu unterscheiden und auf Basis einer entsprechenden Raman-Messung den Sortierprozess zu führen.

### DARSTELLUNG DER ERFINDUNG

Es ist Aufgabe der Erfindung, eine neue Verwendung einer Laser-optischen Vorrichtung vorzustellen, insbesondere im Rahmen eines zerstörungsfreien Verfahrens für die Qualitätsüberprüfung von Oberflächen, insbesondere von Bauteilen für Turbinen wie z.B. Gasturbinen. Insbesondere für Oberflächen, welche anschließend beschichtet werden sollen, beispielsweise mit einer metallischen Schicht, beispielsweise als Verbindungsschicht für eine thermische Schutzschicht. Die Verwendung erstreckt sich aber auch auf die Vorbereitung anderer Beschichtungen, wie z. B. keramischer Schichten oder organischer Schichten. Insbesondere sollen die vorgeschlagenen Verwendungen es ermöglichen, Überreste des Gussverfahrens oder Schmiedeverfahrens, aber auch von vorbereitenden Arbeitsgängen für die (metallische) Beschichtung zuverlässig zu detektieren, so beispielsweise die Überreste einer Oberflächenreinigung oder Oberflächenstrukturierung durch Sandstrahlen, Waschen, Plasmareinigung, Ätzen etc. Es sollen dabei sowohl anorganische wie auch organische Verunreinigungen ermittelt werden können, unabhängig davon, ob sie punktuell oder flächig vorliegen, und es soll eine räumliche Auflösung möglich sein. Im wesentlichen geht es bevorzugtermassen darum, die nicht-metallischen Bestandteile auf der Oberfläche hinsichtlich deren räumlicher Verteilung auf der Oberfläche als auch hinsichtlich deren chemischer Zusammensetzung zu identifizieren.

Diese Aufgabe löst die vorliegende Erfindung gemäß Anspruch 1, d.h. insbesondere durch die Verwendung einer Laser-optischen Vorrichtung mit monochromatischer Einstrahlung bei einer ersten Wellenlänge und Detektion der von einer zu untersuchenden Oberfläche abgestrahlten Strahlung mit einer zweiten Wellenlänge, welche größer ist als die erste Wellenlänge, zur räumlich aufgelösten Analyse der Qualität respektive des Verschmutzungsgrades der Oberfläche eines Turbinenbauteils, welches anschließend mit einer metallischen und/oder keramischen und/oder organischen Schicht versehen werden soll.

Tatsächlich gab es bisher noch keine zerstörungsfreien Verfahren zur Überprüfung der Qualität der vorbereitenden Schritte vor einer Beschichtung eines Gasturbinenbauteils, wobei unter Qualität die Eignung der Oberfläche für einen nächsten Beschichtungsschritt zu verstehen ist. Typischerweise umfasst die Überprüfung der Qualität der Oberfläche eine räumlich aufgelöste Bestimmung der chemischen Zusammensetzung von nicht-metallischen Bestandteilen auf der Oberfläche, da diese potenziell mit einem anschließenden Beschichtungsvorgang interferieren. Entsprechend der vorliegenden Erfindung wird ein solches Verfahren vorgeschlagen als Laser-optisches Verfahren, bei welchem die eingestrahlte Strahlung eine höhere Energie hat als die abgegebene ausgemessene.

Spezifisch können an sich bekannte Verfahren respektive Vorrichtungen eingesetzt werden, so beispielsweise Raman-Spektrometer (z.B. in Form von Mikrosonden), wie sie in der US 4,030,827, US 4,586,819 oder in der US 5,194,912 beschrieben werden. Solche Vorrichtungen werden also erfindungsgemäß dazu verwendet, die Oberflächen von Turbinenbauteilen, insbesondere Gasturbinenbauteilen, der Herstellung von Rohlingen oder nach einer vorbereitenden Behandlung eines solchen Rohlings (ebenfalls möglich ist eine bereits erfolgte erste Beschichtung des Rohlings) und vor einer (gegebenenfalls weiteren) Beschichtung der Oberfläche (metallische und/oder keramische und/oder organische Schicht) zu untersuchen. Die Vorrichtungen, wie sie in diesen Dokumenten nach dem Stand der Technik ganz allgemein aber nicht im Zusammenhang mit einer solchen Verwendung beschrieben wurden, werden ausdrücklich in den Offenbarungsgehalt der vorliegenden Beschreibung eingeschlossen.

Die Erfindung ist also dadurch gekennzeichnet, dass es sich bei der Vorrichtung um ein Raman-Spektrometer (beispielsweise als Mikrosonde) handelt.

Das Raman-Spektrometer wird dabei zur Ermittlung von organischen und/oder anorganischen insbesondere nicht-metallischen Verunreinigungen/Überresten eingesetzt.

Es handelt sich zusätzlich auch um ein Fluoreszenz-Spektrometer (beispielsweise als Mikrosonde). So können beispielsweise Vorrichtungen, wie sie in der US 4,791,310 beschrieben wurden, für die räumlich aufgelöste Untersuchung eingesetzt werden. Die Vorrichtungen, wie sie in diesem Dokument nach dem Stand der Technik ganz allgemein aber nicht im Zusammenhang mit einer solchen Verwendung beschrieben wurden, werden ausdrücklich in den Offenbarungsgehalt der vorliegenden Beschreibung eingeschlossen. Die Erfindung ist also dadurch gekennzeichnet, dass es sich bei der Laser-optischen Vorrichtung um ein Fluoreszenz-Spektrometer handelt. Spezifisch im Zusammenhang mit der vorgeschlagenen Verwendung zeigt es sich nämlich, dass ein Fluoreszenz-Spektrometer sehr empfindlich zur Ermittlung von Aluminiumoxid auf der Oberfläche eingesetzt werden kann.

Nach der Erfindung ist eine solche Verwendung dadurch gekennzeichnet, dass die Vorrichtung sowohl ein Raman-Spektrometer als auch ein Fluoreszenz-Spektrometer umfasst. Mit anderen Worten wird eine kombinierte Vorrichtung eingesetzt, wobei für die beiden unterschiedlichen Verfahren entweder individuelle Laser-Lichtquellen (mit gleichen oder unterschiedlichen Einstrahlungswellenlängen) oder eine gemeinsame LaserLichtquelle eingesetzt werden kann. Die beiden unterschiedlichen Verfahren können dabei gleichzeitig oder sequenziell in der Vorrichtung eingesetzt werden. Die Vorrichtung kann zudem weitere Analyse-Vorrichtungen in Form von Spektrometern oder auch auf Basis von anderen Analysemethoden umfassen.

Die oben angeführten Laser-optischen Vorrichtungen (insbesondere in Form von Mikrosonden) beruhen jeweils darauf, dass eine Laserquelle vorhanden ist, welche eine monochromatische Lichtquelle zur Verfügung stellt, sie verfügen über ein optisches System, einen solchen Lichtstrahl auf die zu untersuchende Oberfläche zu richten, und sie verfügen über ein optisches System, um das von der Oberfläche reflektierte respektive abgestrahlte Licht auf ein Detektorsystem zu leiten, gegebenenfalls mit einem Analysator der Intensität der zurückgeworfenen Strahlung als Funktion der Wellenlänge und/oder Frequenz. Ein solches System kann kombiniert werden mit einem weiteren Laser-System zur räumlich aufgelösten Ausmessung von anderen Eigenschaften der Oberfläche, beispielsweise der Oberflächenstruktur.

Gemäß einer weiteren bevorzugten Ausführungsform wird die Laser-optische Vorrichtung in systematischer, die Oberfläche abtastender Weise über die Oberfläche geführt und die entsprechend räumlich aufgelösten Daten werden zu einem Oberflächenabbild verarbeitet. Unter einem Oberflächenabbild ist im Zusammenhang mit dieser Erfindung eine räumlich aufgelöste Abbildung der nicht-metallisch chemischen Zusammensetzung der Oberfläche respektive der darauf vorhandenen Verunreinigungen/Beschichtungen zu verstehen.

Die Daten eines Raman-Spektrometers und jene eines Fluoreszenz-Spektrometers, oder eines kombinierten Raman/Fluoreszenz-Spektrometers, werden dabei in kombinierter/überlagerter Weise in einer Verarbeitungseinheit zu einem Oberflächenabbild verarbeitet werden.

Die eingestrahlte Strahlung kann auf eine Fläche mit einer Ausdehnung in jeder Raumrichtung im Bereich von 10-100 µm gerichtet werden, und die von der Oberfläche abgestrahlte Strahlung kann kollimiert und/oder gefiltert und/oder verstärkt und/oder fokussiert werden und hinsichtlich der darin enthaltenen Frequenzen und/oder Intensitäten analysiert werden zur Erzeugung des Oberflächenabbilds.

Alternativ ist es möglich, die eingestrahlte Strahlung auf eine Fläche mit einer Ausdehnung in jeder Raumrichtung im Bereich von 10-20 mm zu defokussieren.

Einstrahlung und/oder Auskopplung können unter Zuhilfenahme wenigstens einer optischen Faser durchgeführt werden, wobei die gleiche optische Faser für Einstrahlung und Auskopplung eingesetzt werden kann.

Bevorzugtermassen handelt es sich bei der Oberfläche um die Oberfläche eines Turbinenbauteils, insbesondere eines Gasturbinenbauteils aus einem metallischen Werkstoff, beispielsweise aus einem Hochtemperaturwerkstoff. Der Werkstoff hat dabei bevorzugtermassen nach dem Gussverfahren und/oder Schmiedeverfahren eine Oberflächenbehandlung ausgewählt aus der Gruppe Sandstrahlen, Waschen, Ätzen, Plasmabehandlung sowie einer Kombination solcher Behandlungen durchlaufen und es werden die von diesen vorbereitenden Behandlungen erzeugten Überreste sowie gegebenenfalls weitere Verunreinigungen identifiziert und räumlich aufgelöst lokalisiert. Ebenfalls kann der Werkstoff bereits einem Beschichtungsvorgang unterzogen worden sein (beispielsweise kann es sich um ein Turbinenbauteil handeln, auf welchem bereits eine metallische Verbindungsschicht - in der Regel als bond coat bezeichnet - für den Aufbau einer thermischen Barriereschicht aufgebracht worden ist) und dann diese Oberfläche untersucht werden, wobei nach dem Beschichtungsvorgang auch unter Umständen die oben genannten Oberflächenbehandlungen durchgeführt worden sein können.

Weitere Ausführungsformen sind in den abhängigen Ansprüchen angegeben.

### KURZE BESCHREIBUNG DER ZEICHNUNGEN

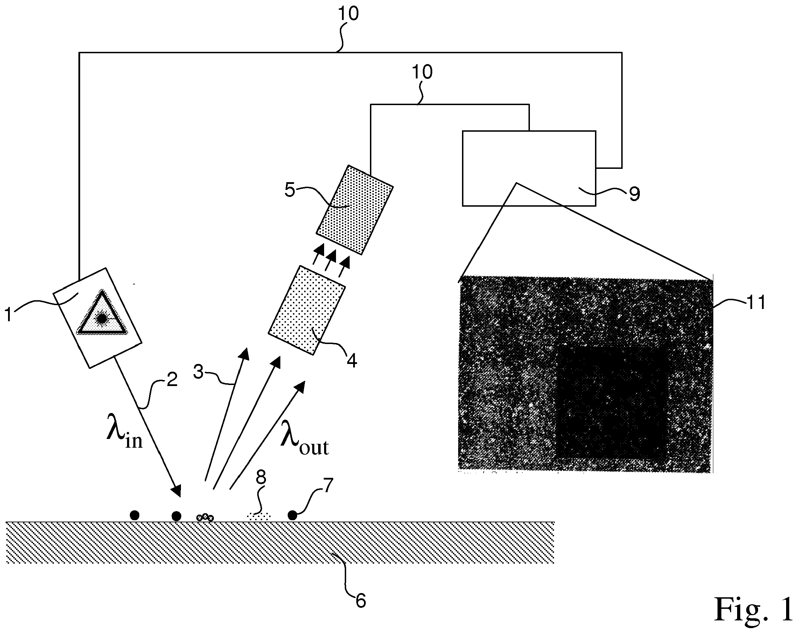

Bevorzugte Ausführungsformen der Erfindung werden im Folgenden anhand der Zeichnung beschrieben, die lediglich zur Erläuterung dient und nicht einschränkend auszulegen ist. Die einzige Figur (Fig.1) zeigt einen schematischen Aufbau der Vorrichtung und des Verfahrens nach der Erfindung sowie eine resultierende grafische Darstellung der Analyse.

### BESCHREIBUNG BEVORZUGTER AUSFÜHRUNGSFORMEN

In Figur 1 ist in schematischer Weise das vorgeschlagene Verfahren resp. die dazu verwendeten wesentlichen Bauelemente dargestellt. Zu untersuchen ist dabei eine Oberfläche 6, es handelt sich dabei um ein Bauteil einer Gasturbine, welches entweder als Gussrohling vorbereitenden Arbeitsgängen zur Vorbereitung der Oberfläche für einen Beschichtungsvorgang unterzogen wurde, beispielsweise zur Erzeugung einer metallischen und/oder keramischen Schicht, oder es handelt sich um die Oberfläche eines solchen Bauteils, bei welchem eine früher auf der Oberfläche vorhandene solche Schicht entfernt wurde, die Oberfläche gereinigt und bearbeitet wurde, und wieder eine neue Schicht aufgetragen werden soll.

Es kann sich dabei um partikuläre Verschmutzungen 7 handeln, beispielsweise um Rückstände eines Sandstrahlprozesses, d.h. um in diesem Prozess verwendetet Körner, welche auf der Oberfläche verblieben sind. Es kann sich aber auch um flächige Rückstände 6 handeln, so beispielsweise um anorganische oder organische Substanzen, welche beispielsweise Überreste sind von Reinigungsprozessen etc.

Die Vorrichtung verfügt über eine monochromatische Strahlungsquelle in Form eines Lasers 1. Dieser Laser richtet einen monochromatischen Laserstrahl 2 mit einer Wellenlänge λᵢₙ auf die zu untersuchende Oberfläche. Dies geschieht in kontrollierter Weise, d.h. die Position des Lasers über der Oberfläche wird über eine Vorrichtung festgelegt und die Messung erfolgt als Funktion dieser Position.

Der Lichtstrahl trifft auf die Oberfläche, das Licht wird entweder reflektiert oder absorbiert und wird von der Oberfläche wieder abgegeben und zwar mit einer einer größeren Wellenlänge λₒᵤₜ als die Wellenlänge der eingestrahlten Strahlung λᵢₙ. Mit anderen Worten ist die Frequenz der abgestrahlten Strahlung niedriger als die eingestrahlte Frequenz. Dieses abgestrahlte Licht 3 charakterisiert dabei die Verunreinigungen 7, 8, da die Frequenzverschiebung (respektive die Wellenlängenverschiebung) und/oder die spezifische Abstrahlungsfrequenz (respektive Abstrahlungswellenlänge) charakteristisch sind für die Natur der Verunreinigung. Die Position der entsprechenden Verunreinigung wird ausgemessen, indem sowohl der Laser wie auch ein entsprechendes Filterelement 4 und ein dahinter geschalteter Detektor 5 auf einer gezielten räumlichen Position gehalten wird. Anstelle eines Filterelements 4 kann es sich auch um einen Kollimator, einen Frequenzfilter, oder eine Linse handeln, je nach dem welche Funktion im Zusammenhang mit der verwendeten Untersuchungsmethode erforderlich ist.

Die vom Detektor 5 detektierte Strahlung wird anschliessend über eine Verbindung an eine Steuerungseinheit resp. Analyseeinheit 9 übergeben. Diese Steuerungseinheit 9 steuert auch den Laser 1, sowie die räumliche Position dieser Einheiten. Entsprechend steuert die Steuerungseinheit 9 das optische Element in einem Scanningprozess über die Oberfläche und schreibt die Daten als Funktion der Position der optischen Bauteile mit und erzeugt daraus, gegebenenfalls nach einer entsprechenden Datenverarbeitung und Filterung resp. Mittelung zur Rauschunterdrückung, ein Oberflächenabbild 11.

Das in Figur 1 dargestellte Oberflächenabbild zeigt dabei ein entsprechendes Beispiel eines solchen Abbildes auf welchem die Überreste eines Sandstrahlprozesses sichtbar sind.

Im Zusammenhang mit diesem allgemeinen Schema können Oberflächenverschmutzungen einerseits mit Raman-Spektroskopie detektiert werden zur Ermittlung von Verschmutzungen und Überresten aus dem Giessverfahren.

Fluoreszenzspektroskopie kann eingesetzt werden für die Detektion von Aluminiumoxidresten oder Überresten aus dem Gussverfahren.

Das System zur Durchführung der Analyse kann dabei ausgelegt sein, nur einen Typ eines Spektrums in einem definierten Bereich auszumessen, d.h. nur um einen ganz spezifischen Typ von Verunreinigung zu detektieren, oder es können auch beide Typen untersucht werden, um mehrere verschiedene Typen von Verunreinigungen zu detektieren. Grundsätzlich kann das optische System für das eingestrahlte Licht entweder in einem fokussierten Verfahren arbeiten. Dabei wird der Laserstrahl auf einen kleinen Spot von typischerweise in beiden Raumrichtungen nicht mehr als 10 bis 100 Mikrometern gerichtet werden.

Alternativ ist es möglich, das eingestrahlte Licht zu defokussieren und einen relativ grossen Oberflächenbereich von ca. 10 mm Ausdehnung in beiden Raumrichtungen auszuleuchten. Der von der Oberfläche zurückgeworfene Strahl zum Spektrometer kann im Spektrometer entweder wiederum nur hinsichtlich ganz spezifischer Wellenlängen untersucht werden oder aber hinsichtlich des ganzen Spektrums als Funktion der Position. Wird eine grosse Fläche ausgeleuchtet, so kann die räumliche Information über eine entsprechend räumlich aufgelöste Detektion erfolgen.

Grundsätzlich kann ein erstes Spektrometer zur Aufnahme der durch Aluminiumoxid erzeugten Fluoreszenz eingesetzt werden und ein zweites Spektrometer zur Aufnahme der Raman-Spektren der untersuchten Oberfläche, wobei das Raman-Spektrum dazu eingesetzt wird, um organische oder anorganische Verschmutzungen an der Oberfläche zu ermitteln. Aufgrund der niedrigen Effizienz des Raman-Effekts (Frequenzverschiebung) können die beiden Techniken in zwei völlig unabhängigen Systemen eingesetzt werden, wobei die Fluoreszenzmessung für die räumliche Auflösung von Aluminiumoxid an der Oberfläche im Sinne eines Mikroskopieprozesses eingesetzt wird, was es dann ermöglicht, die Daten in einer Weise zu verarbeiten, so dass die Grössenverteilung von Aluminiumoxidpartikeln, deren räumliche Verteilung, deren Form, und/oder deren Dicke ermittelt resp. abgebildet werden kann. Das Raman-Signal kann auch nur dazu eingesetzt werden, nur die Anwesenheit resp. Abwesenheit von Verschmutzungen auf der zu untersuchenden Oberfläche festzustellen.

Entweder kann die optische Vorrichtung auf einer starr montierten Bauteilhalterung verschoben werden, um unterschiedliche Oberflächenbereiche auszumessen, es ist aber auch möglich, das optische System räumlich fixiert zu halten und das Bauteil auf einem entsprechenden Schlitten relativ zur optischen Vorrichtung zu bewegen. Insbesondere im Zusammenhang mit einer Bewegung des optischen Systems kann es sich als vorteilhaft erweisen, optische Fasern einzusetzen, welche in einem Scanningprozess auf der Oberfläche resp. entlang der Oberfläche geführt werden. Dabei kann die gleiche optische Faser dazu eingesetzt werden, den eingestrahlten Laserstrahl auf die Oberfläche zu richten und das von der Oberfläche zurückgegebene Licht zu einem Detektor zu leiten.

Im Rahmen von Versuchen wurde festgestellt, dass tatsächlich unter Verwendung der vorgeschlagenen Verfahren Überreste eines Standstrahlverfahrens mit einem Raman-Mikroskop und mit einem Fluoreszenzmikroskop gemapt werden können. Es war möglich, ein Oberflächenabbild eines Oberflächenabschnitts von 4x4 mm mit einer Auflösung von ungefähr 10 Mikrometer in einem Zeitraum von 90 Minuten zu erhalten. In Figur 1 ist die entsprechende optische Abbildung der Überreste eines Standstrahlprozesses dargestellt.

**BEZUGSZEICHENLISTE**

| | | | |
|---|---|---|---|
| 1 | Laser | 8 | flächige Verschmutzung |
| 2 | eingestrahlter Laserstrahl | 9 | Steuerungseinheit/ Analyseeinheit |
| 3 | von der Oberfläche abgegebener Lichtstrahl | | |
| | | 10 | Verbindungen |
| 4 | Filterelement (Kollimator, Frequenzfilter, Linse) | 11 | Oberflächenabbild |
| | | λᵢₙ | eingestrahlte Wellenlänge |
| 5 | Detektor | λₒᵤₜ | abgegebene Wellenlänge |
| 6 | Bauteiloberfläche | | |
| 7 | punktuelle Verschmutzung (Körner etc.) | | |

## Patentansprüche

1. Verwendung einer Laser-optischen Vorrichtung mit monochromatischer Einstrahlung bei einer ersten Wellenlänge (λᵢₙ) und Detektion der von einer zu untersuchenden Oberfläche (6) abgestrahlten Strahlung mit einer zweiten Wellenlänge (λₒᵤₜ), welche größer ist als die erste Wellenlänge (λᵢₙ), zur räumlich aufgelösten Analyse der chemischen Zusammensetzung der nicht-metallischen Bestandteile auf der Oberfläche (6),
**dadurch gekennzeichnet, dass**
es sich bei der Oberfläche (6) um die Oberfläche eines Turbinenbauteils handelt, welches anschließend mit einer metallischen und/oder keramischen und/oder organischen Schicht versehen werden soll,
dass die Vorrichtung sowohl ein Raman-Spektrometer als auch ein Fluoreszenz-Spektrometer, oder ein kombiniertes Raman/Fluoreszenz-Spektrometer umfasst, und dass die Vorrichtung in systematischer, die Oberfläche abtastender Weise über die Oberfläche geführt wird und die entsprechend räumlich aufgelösten Daten zu einem Oberflächenabbild (11) verarbeitet werden, wobei die Daten des Raman-Spektrometers und jene des Fluoreszenz-Spektrometers, oder des kombinierten Raman/Fluoreszenz-Spektrometers, in kombinierter Weise zu einem Oberflächenabbild (11) verarbeitet werden.

2. Verwendung nach Anspruch 1, **dadurch gekennzeichnet, dass** das Raman-Spektrometer zur Ermittlung von organischen und/oder anorganischen Verunreinigungen/Überresten eingesetzt wird.

3. Verwendung nach einem der vorhergehenden Ansprüche, **dadurch gekennzeichnet, dass** das Fluoreszenz-Spektrometer zur Ermittlung von Aluminiumoxid auf der Oberfläche eingesetzt wird.

4. Verwendung nach einem der vorhergehenden Ansprüche, **dadurch gekennzeichnet, dass** die eingestrahlte Strahlung auf eine Fläche mit einer Ausdehnung in jeder Raumrichtung im Bereich von 10-100 µm gerichtet wird, und dass die von der Oberfläche abgestrahlte Strahlung kollimiert und hinsichtlich der darin enthaltenen Frequenzen und/oder Intensitäten analysiert wird zur Erzeugung des Oberflächenabbilds (11).

5. Verwendung nach einem der vorhergehenden Ansprüche 1-3, **dadurch gekennzeichnet, dass** die eingestrahlte Strahlung auf eine Fläche mit einer Ausdehnung in jeder Raumrichtung im Bereich von 1-20 mm defokussiert wird, und dass die von der Oberfläche abgestrahlte Strahlung kollimiert und hinsichtlich der darin enthaltenen Frequenzen und/oder Intensitäten analysiert wird zur Erzeugung des Oberflächenabbilds (11).

6. Verwendung nach einem der vorhergehenden Ansprüche, **dadurch gekennzeichnet, dass** die Einstrahlung und/oder die Auskopplung unter Zuhilfenahme wenigstens einer optischen Faser durchgeführt werden.

7. Verwendung nach Anspruch 6, **dadurch gekennzeichnet, dass** die gleiche optische Faser für Einstrahlung und Auskopplung eingesetzt wird.

8. Verwendung nach einem der vorhergehenden Ansprüche, **dadurch gekennzeichnet, dass** es sich bei der Oberfläche (6) um die Oberfläche eines Turbinenbauteils, insbesondere eines Gasturbinenbauteils aus einem metallischen Werkstoff insbesondere aus einem Hochtemperaturwerkstoff handelt.

9. Verwendung nach Anspruch 8, **dadurch gekennzeichnet, dass** der Werkstoff, insbesondere der Hochtemperaturwerkstoff nach dem Gussverfahren und/oder Schmiedeverfahren eine Oberflächenbehandlung ausgewählt aus der Gruppe Sandstrahlen, Waschen, Ätzen, Plasmabehandlung, Beschichtung sowie einer Kombination solcher Behandlungen durchlaufen hat.

## Claims

1. Use of a laser-optical device with monochromatic irradiation at a first wavelength (λᵢₙ) and detection of the radiation emitted by a surface (6) to be examined with a second wavelength (λₒᵤₜ) which is greater than the first wavelength (λᵢₙ), for spatially resolved analysis of the chemical composition of the non-metallic constituents on the surface (6),
**characterised in that**
the surface (6) is the surface of a turbine component which is later to be provided with a metallic and/or ceramic and/or organic coating,
the device comprises both a Raman spectrometer and a fluorescence spectrometer, or a combined Raman/fluorescence spectrometer, and
the device is guided over the surface in a systematic fashion scanning the surface, and the correspondingly spatially resolved data are processed into a surface image (11), wherein the data from the Raman spectrometer and those from the fluorescence spectrometer or the combined Raman/fluorescence spectrometer are processed in combined fashion into a surface image (11).

2. Use according to claim 1, **characterised in that** the Raman spectrometer is used to determine organic and/or inorganic contaminants/residues.

3. Use according to one of the preceding claims, **characterised in that** the fluorescence spectrometer is used to determine aluminium oxide on the surface.

4. Use according to any of the preceding claims, **characterised in that** the irradiated radiation is directed onto an area with an extension in each spatial direction in the range from 10-100 µm, and that the radiation emitted by the surface is collimated and analysed with regard to the frequencies and/or intensities contained therein in order to generate the surface image (11).

5. Use according to any of the preceding claims 1 to 3, **characterised in that** the irradiated radiation is defocused on an area with an extension in each spatial direction in the range from 1-20 mm, and that the radiation emitted by the surface is collimated and analysed with regard to the frequencies and/or intensities contained therein in order to generate the surface image (11).

6. Use according to any of the preceding claims, **characterised in that** the irradiation and/or output decoupling are carried out using at least one optical fibre.

7. Use according to claim 6, **characterised in that** the same optical fibre is used for irradiation and output decoupling.

8. Use according to any of the preceding claims, **characterised in that** the surface (6) is the surface of a turbine component, in particular a gas turbine component, made of a metallic material, in particular a high-temperature material.

9. Use according to claim 8, **characterised in that** material, in particular the high-temperature material, after the casting process and/or forging process has undergone a surface treatment selected from the group of sand-blasting, washing, etching, plasma treatment, coating and a combination of such treatments.

## Revendications

1. Utilisation d'un dispositif optique laser doté d'un rayonnement monochromatique avec une première longueur d'onde (λin) et détection du rayonnement émis par une surface à examiner (6) avec une deuxième longueur d'onde (λout), supérieure à la première longueur d'onde (λin), en vue d'une analyse à résolution spatiale de la composition chimique des composants non métalliques de la surface (6),
**caractérisée en ce que**
la surface (6) est la surface d'un composant de turbine qui doit ensuite être munie d'une couche métallique et/ou céramique et/ou organique,
le dispositif comprend aussi bien un spectromètre Raman qu'un spectromètre à fluorescence ou un spectromètre combiné Raman/fluorescence,
et le dispositif est guidé de manière systématique au-dessus de la surface en balayant celle-ci et les données correspondantes relevées spatialement sont traitées afin d'obtenir une représentation de la surface (11), les données du spectromètre Raman et celles du spectromètre à fluorescence ou du spectromètre combiné Raman/fluorescence étant traitées de manière combinée afin d'obtenir une représentation de la surface (11).

2. Utilisation selon la revendication 1, **caractérisée en ce que** le spectromètre Raman est utilisé pour la détermination d'impuretés/résidus organiques et/ou anorganiques.

3. Utilisation selon l'une des revendications précédentes, **caractérisée en ce que** le spectromètre à fluorescence est utilisé pour la détection d'oxyde d'aluminium à la surface.

4. Utilisation selon l'une des revendications précédentes, **caractérisée en ce que** le rayonnement incident est dirigé vers une surface avec une extension dans chaque direction spatiale de l'ordre de 10 à 100 µm, et **en ce que** le rayonnement émis par la surface est collimaté et analysé au regard des fréquences et/ou intensités contenues, pour générer la représentation de la surface (11).

5. Utilisation selon l'une des revendications 1 à 3, **caractérisée en ce que** le rayonnement incident est défocalisé sur une surface avec une extension dans chaque direction spatiale de l'ordre de 1 à 20 nm et **en ce que** le rayonnement émis par la surface est collimaté et analysé au regard des fréquences et/ou des intensités contenues, pour générer la représentation de la surface (11).

6. Utilisation selon l'une des revendications précédentes, **caractérisée en ce que** l'irradiation et/ou le découplage est effectué à l'aide d'au moins un faser optique.

7. Utilisation selon la revendication 6, **caractérisée en ce que** le même faser optique est utilisé pour l'irradiation et le découplage.

8. Utilisation selon l'une des revendications précédentes, **caractérisée en ce que** la surface (6) est la surface d'un composant de turbine, plus particulièrement d'un composant de turbine constitué d'un matériau métallique, plus particulièrement d'un matériau résistant à de hautes températures.

9. Utilisation selon la revendication 8, **caractérisée en ce que** le matériau, plus particulièrement le matériau résistant à de hautes températures a subi, après le processus de coulée et/ou de forgeage, un traitement de surface sélectionné parmi le groupe constitué du sablage, du lavage, du décapage, du traitement au plasma, d'un revêtement ainsi que d'une combinaison de ces traitements.
